# FASCICULE DE BREVET EUROPEEN

(11) **EP 2 948 568 B1**
(45) Date de publication et mention de la délivrance du brevet: **06.03.2019**
(21) Numéro de dépôt: 14705836.6
(22) Date de dépôt: 22.01.2014
(51) Int. Cl.: C21D 1/767, C21D 9/00, F27B 5/16, H02K 21/24, F27D 7/04, H02K 7/14

(54) **CELLULE DE TREMPE SOUS GAZ**
GASABSCHRECKKAMMER
GAS QUENCHING CELL

(30) Priorité: 23.01.2013 FR 1350575
(43) Date de publication de la demande: 02.12.2015
(73) Titulaire: ECM TECHNOLOGIES, 38000 Grenoble (FR)
(72) Inventeur: TISSOT, Gérard, F-38330 Saint-Nazaire-Les-Eymes (FR); PELISSIER, Francis, F-38000 Grenoble (FR)
(74) Mandataire: Cabinet Beaumont
(86) Numéro de dépôt international: PCT/FR2014/050122
(87) Numéro de publication internationale: WO 2014/114881

(56) Documents cités:
- US-A- 4 653 732
- US-A- 5 334 899
- LOESER K ET AL: "NEUE ENTWICKLUNGEN AUF DEM GEBIET DER HOCHDRUCK-GASABSCHRECKUNG", HTM HAERTEREI TECHNISCHE MITTEILUNGEN: ZEITSCHRIFT FUER WERKSTOFFE, WAERMEBEHANDLUNG UND FERTIGUNG, CARL HANSER VERLAG, MUNCHEN, DE, vol. 58, no. 2, 2003, pages 74-82, XP001144477, ISSN: 0341-101X

## Description

### Domaine de l'invention

Des modes de réalisation de la présente invention concernent une cellule de trempe sous gaz pour pièces, notamment en acier.

### Exposé de l'art antérieur

Les procédés de trempe sous gaz de pièces en acier présentent de nombreux intérêts par rapport à des procédés de trempe par liquide, notamment le fait que les pièces traitées sortent sèches et propres.

La trempe gazeuse de pièces en acier ayant subi au préalable un traitement thermique (par exemple chauffage avant trempe) ou thermochimique (cémentation, carbonitruration...) est généralement réalisée avec un gaz sous pression, de façon générale entre 4 et 20 bars. Le gaz de trempe est par exemple de l'azote, de l'argon, de l'hélium, du dioxyde de carbone, de l'hydrogène ou un mélange de ces gaz.

Une opération de trempe consiste à refroidir de façon rapide des pièces en acier qui sont généralement à des températures comprises entre 750°C et 1000°C, voire 1200°C pour des aciers inoxydables. A de telles températures, l'acier se trouve essentiellement sous la forme d'austénite qui n'est stable qu'à des températures élevées. Une opération de trempe permet par un refroidissement rapide d'obtenir une transformation de l'austénite en martensite qui présente des propriétés de dureté plus élevées.

Une cellule de trempe comprend généralement au moins un moteur, généralement du type électrique, entraînant en rotation un élément de brassage, par exemple une hélice ou une turbine centrifuge, adapté à mettre en circulation le gaz de trempe dans la cellule de trempe au niveau des pièces à refroidir et des échangeurs thermiques permettant de refroidir le gaz de trempe. De façon classique, on utilise des moteurs électriques asynchrones disposés à l'extérieur de l'enceinte de la cellule de trempe. L'arbre d'entraînement de chaque moteur électrique asynchrone est relié à l'élément de brassage au travers de la paroi de l'enceinte.

Les moteurs électriques d'entraînement des éléments de brassage peuvent être disposés au sommet de l'enceinte. Dans ce cas, l'encombrement au sol de la cellule de trempe est fixé essentiellement par les dimensions de l'enceinte de la cellule de trempe.

Toutefois, dans certaines conditions, notamment selon la direction recherchée de l'écoulement du gaz de trempe au niveau des pièces à traiter, il peut être nécessaire de disposer les moteurs électriques d'entraînement des éléments de brassage à l'extérieur de l'enceinte de la cellule de trempe de part et d'autre de l'enceinte sensiblement dans le plan médian horizontal de l'enceinte.

Une telle cellule de trempe est décrite dans "Neue Entwicklungen auf dem Gebiet der Hochdruck-Gasabschreckung", K. Löser, V. Heuer, Härtereitechnische Mitteilungen 58 (2003), p. 74-82

La mise en place des moteurs électriques asynchrones sur les côtés de l'enceinte augmente l'encombrement au sol de la cellule de trempe. L'encombrement total de la cellule de trempe comprend, en plus de l'encombrement au sol, une zone autour de la cellule de trempe qui doit être laissée libre pour pouvoir accéder à la cellule de trempe, notamment pour des opérations de maintenance, par exemple la dépose et l'installation des moteurs électriques. De ce fait, l'encombrement total d'une cellule de trempe dont les moteurs électriques sont disposés latéralement de part et d'autre de l'enceinte de la cellule de trempe est augmenté par rapport à la même cellule de trempe pour laquelle les moteurs électriques sont disposés au sommet de l'enceinte de la cellule de trempe.

Il existe donc un besoin de réduire l'encombrement total d'une cellule de trempe au gaz pour laquelle au moins un moteur électrique d'entraînement d'un élément de brassage est disposé sur le côté de l'enceinte de la cellule de trempe.

### Résumé

Un objet d'un mode de réalisation de l'invention est de pallier au moins en partie les inconvénients des cellules de trempe décrites précédemment.

Selon un autre objet d'un mode de réalisation de la présente invention, la cellule de trempe a un encombrement total réduit, et notamment un encombrement au sol réduit.

Selon un autre objet d'un mode de réalisation de la présente invention, la maintenance des moteurs électriques d'entraînement des éléments de brassage de la cellule de trempe est facilitée.

Ainsi, un mode de réalisation prévoit une cellule de trempe comprenant une enceinte contenant au moins un élément de brassage d'un gaz de trempe à une pression supérieure à 0,4 MPa et un moteur électrique synchrone à flux axial et à aimants permanents adapté à entraîner en rotation l'élément de brassage.

Selon un mode de réalisation, le moteur électrique synchrone est étanche par rapport à l'extérieur de la cellule de trempe, pour une pression dans le moteur électrique synchrone comprise entre 10 Pa et 2500000 Pa.

Selon un mode de réalisation, le moteur électrique synchrone comprend au moins deux flasques en acier délimitant un volume contenant au moins un stator, lesdits flasques résistant à la pression dans le moteur électrique synchrone.

Selon un mode de réalisation, la cellule comprend un circuit d'alimentation en gaz de trempe de l'enceinte et du moteur électrique synchrone.

Selon un mode de réalisation, le circuit d'alimentation est adapté à maintenir, lors d'une opération de trempe, la pression dans le moteur électrique synchrone strictement supérieure à la pression dans l'enceinte.

Selon un mode de réalisation, la pression dans le moteur électrique synchrone est supérieure d'au moins 500 Pa à la pression dans l'enceinte.

Selon un mode de réalisation, le circuit d'alimentation est adapté à maintenir, lors d'une opération de trempe, la pression dans le moteur électrique synchrone égale à la pression dans l'enceinte.

Selon un mode de réalisation, la cellule comprend un capteur de la pression dans le moteur électrique synchrone et/ou un capteur de la différence entre la pression dans le moteur électrique synchrone et la pression dans l'enceinte.

Selon un mode de réalisation, le circuit d'alimentation est adapté à asservir la pression dans le moteur électrique synchrone par rapport à la pression dans l'enceinte.

Selon un mode de réalisation, le moteur électrique synchrone est situé en dehors de l'enceinte et comprend un arbre d'entraînement relié à l'élément de brassage au travers de l'enceinte.

Selon un mode de réalisation, le moteur électrique synchrone comprend un rotor et deux stators situés de part et d'autre du rotor.

Selon un mode de réalisation, le moteur électrique synchrone comprend deux flasques et un rotor situé entre les deux flasques et relié à un arbre d'entraînement, chaque flasque comprenant une première ouverture traversante pour le passage de l'arbre d'entraînement et des deuxièmes ouvertures traversantes autour de la première ouverture.

Selon un mode de réalisation, au moins l'une des deuxièmes ouvertures est reliée à une conduite d'alimentation du moteur en gaz lorsque la cellule de trempe est en fonctionnement.

### Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :
la figure 1 est une vue latérale, avec coupe partielle, d'un exemple de cellule de trempe ;
la figure 2 est une vue analogue à la figure 1 d'une cellule de trempe selon un mode de réalisation de l'invention ;
la figure 3 est une coupe latérale d'une partie d'une cellule de trempe selon un mode de réalisation de l'invention ; et
les figures 4 et 5 sont respectivement une coupe et une vue en perspective du moteur électrique du mode de réalisation de la cellule de trempe de la figure 3.

Par souci de clarté, de mêmes éléments ont été désignés par de mêmes références aux différentes figures.

### Description détaillée

Dans la suite de la description, les expressions "sensiblement", "approximativement", "environ" et "de l'ordre de" signifient "à 10% près". En outre, seuls les éléments nécessaires à la compréhension de l'invention sont représentés. En particulier, le système de refroidissement du gaz de trempe dans la cellule de trempe n'est pas représenté en détail.

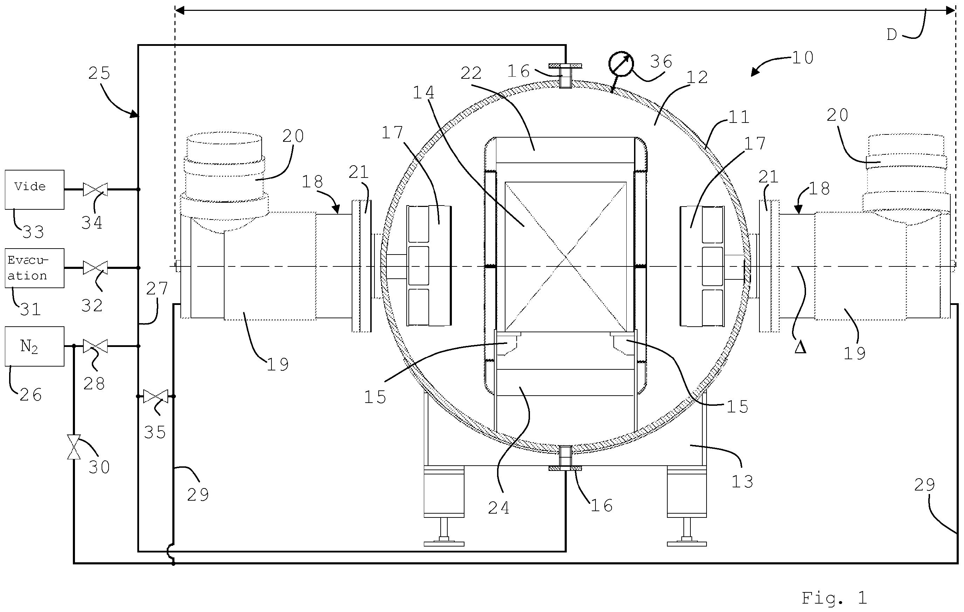

La figure 1 représente un exemple d'une cellule de trempe 10 au gaz. La cellule de trempe 10 comprend une enceinte 11 délimitant le volume interne 12 de la cellule de trempe 10. L'enceinte 11 peut être une enceinte cylindrique d'axe horizontal. A titre de variante, l'axe de l'enceinte 11 peut être vertical. L'enceinte 11 repose sur un support 13. Une charge, contenant des pièces à traiter 14, représentées de façon schématique en figure 1, peut être introduite dans l'enceinte 11 sur des rails 15.

Un gaz de trempe peut être introduit dans l'enceinte 11 par des ouvertures 16 et être mis en circulation dans l'enceinte 11 par des éléments de brassage 17. Le gaz de trempe est par exemple de l'azote, de l'argon, de l'hélium, du dioxyde de carbone, de l'hydrogène ou un mélange de ces gaz. Lors d'une opération de trempe, la pression dans la cellule de trempe 10 peut être maintenue entre 4 bars (0,4 MPa) et 25 bars (2,5 MPa) et est, de préférence, supérieure ou égale à 10 bars (1 MPa), plus préférentiellement supérieure à 15 bars (1,5 MPa). Les éléments de brassage 17 comprennent, par exemple, des roues centrifuges ou hélico-centrifuges. A titre d'exemple, deux éléments de brassage 17 sont représentés en figure 1 dans l'enceinte 11 de chaque côté de la charge 14. Les éléments de brassage 17 peuvent entraîner le gaz de trempe de façon qu'il s'écoule au travers de la charge 14 selon la direction verticale.

Lors d'une opération de trempe, chaque élément de brassage 17 est entrainé en rotation autour d'un axe Δ par un moteur électrique 18. L'axe Δ peut être commun aux deux éléments de brassage 17. A titre d'exemple, l'axe Δ est horizontal et est situé sensiblement dans le plan médian horizontal de l'enceinte 11. Les moteurs électriques 18 sont généralement des moteurs électriques asynchrones. En figure 1, pour chaque moteur électrique asynchrone 18, on a représenté un carter 19 contenant le stator et le rotor du moteur électrique, ayant une forme générale cylindrique d'axe Δ, et un carter 20, de forme générale cylindrique, qui prolonge le carter 19 à son extrémité opposée à l'enceinte 11 sensiblement selon une direction perpendiculaire à l'axe Δ et contenant les circuits d'électronique de puissance de commande du moteur électrique asynchrone. Pour chaque moteur électrique asynchrone, le carter 19 est fixé à un dispositif de couplage 21 lui-même fixé, par exemple par soudage, à l'enceinte 11.

La cellule de trempe 10 comprend, en outre, des systèmes de refroidissement 22, 24 pour refroidir le gaz de trempe. A titre d'exemple, un système de refroidissement 22 est disposé dans l'enceinte 11 au-dessus de la charge 14 et un système de refroidissement 24 est disposé dans l'enceinte 11 au-dessous de la charge 14. La cellule de trempe 10 peut comprendre un système, non représenté, pour imposer le sens de circulation du gaz au travers de la charge 14, par exemple du bas vers le haut ou du haut vers le bas.

Un circuit 25 d'alimentation en gaz de trempe comprend une source 26 du gaz de trempe reliée aux ouvertures 16 par des conduites 27. Au moins une vanne 28 commandable est prévue sur les conduites 27. Lorsque la vanne 28 est ouverte, du gaz de trempe est fourni dans le volume interne 12 de la cellule de trempe. Lorsque la vanne 28 est fermée, l'alimentation du volume interne 12 en gaz de trempe est interrompue. La source 26 du gaz de trempe est, en outre, reliée aux moteurs 18 par des conduites 29. Au moins une vanne 30 commandable est prévue sur les conduites 29. Lorsque la vanne 30 est ouverte, du gaz de trempe est fourni dans le volume interne des moteurs 18. Lorsque la vanne 30 est fermée, l'alimentation du volume interne des moteurs 18 en gaz de trempe est interrompue.

Le circuit d'alimentation 25 comprend un système d'évacuation du gaz de trempe 31 relié aux conduites 27 par une vanne commandable 32. Le circuit d'alimentation 25 comprend, en outre, un système de mise sous vide 33 relié aux conduites 27 par une vanne commandable 34. Les conduites 29 d'alimentation des moteurs sont reliées aux conduites 27 d'alimentation du volume interne 12 de la cellule de trempe par l'intermédiaire d'une vanne commandable 35. Le circuit d'alimentation 25 comprend un capteur 36 de la pression dans le volume interne 12 de la cellule de trempe 10.

Lors d'un cycle de fonctionnement de la cellule de trempe, le gaz de trempe présent dans la cellule est évacué par le système d'évacuation 31 puis la cellule de trempe 10 est mise sous vide par le système 33. Du gaz de trempe est ensuite injecté dans les moteurs asynchrones 18 et dans la cellule de trempe. L'opération de trempe est ensuite réalisée, la pression dans les moteurs asynchrones 18 étant sensiblement égale à la pression dans le volume interne 12 de la cellule de trempe 10.

L'encombrement D latéral au sol maximal de la cellule de trempe 10 correspond à la somme du diamètre de l'enceinte 11, de la longueur axiale de chaque dispositif de couplage 21 et de la longueur axiale de chaque moteur électrique asynchrone 18.

A titre d'exemple, pour une cellule de trempe ayant un diamètre de 1,8 m et ayant un volume interne 12 de 3 à 4 m³, les moteurs 18 doivent fournir une puissance supérieure à 200 kW, notamment lorsque le gaz de trempe est de l'azote. Chaque moteur électrique asynchrone 18 est généralement un moteur à flux radial. La longueur axiale de chaque moteur électrique asynchrone 18 peut être de l'ordre de 1 m. De ce fait, l'encombrement au sol latéral maximal D de la cellule de trempe 10 peut atteindre 5 m en tenant compte d'un passage de 50 cm pour l'accès à chaque moteur 18.

Il est, en outre, généralement nécessaire de prévoir pour chaque moteur électrique 18 une zone supplémentaire de l'ordre de 50 cm, notamment pour les opérations de maintenance, par exemple la dépose et le remplacement de chaque moteur électrique 18. De ce fait, l'encombrement latéral total maximal de la cellule de trempe 10, incluant les zones d'accès, peut atteindre 6 m. Les dimensions des locaux dans lesquels la cellule de trempe 10 est disposée doivent donc être adaptées à l'encombrement latéral total de la cellule de trempe 10, ce qui augmente les coûts associés à l'utilisation de la cellule de trempe 10.

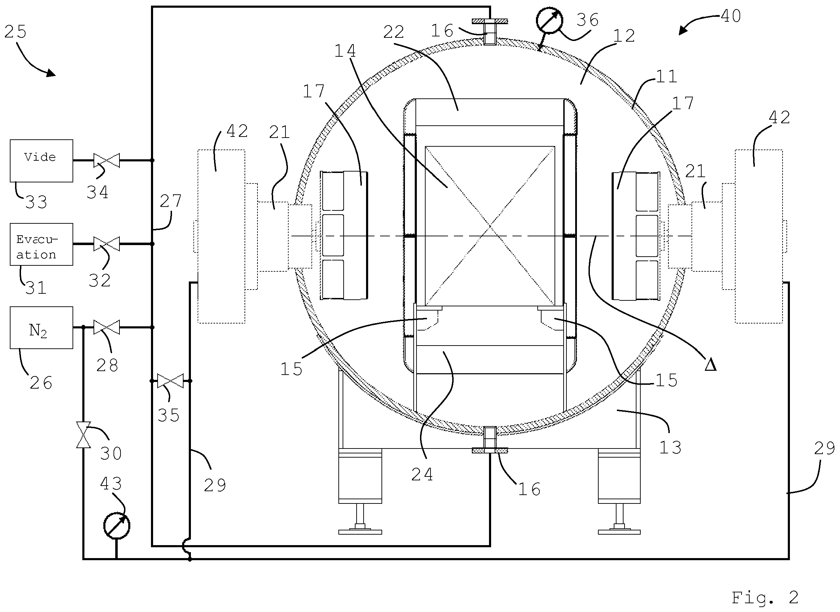

La figure 2 représente un mode de réalisation selon l'invention d'une cellule de trempe 40 au gaz.

La cellule de trempe 40 comprend l'ensemble des éléments de la cellule de trempe 10 représentée en figure 1 à la différence que chaque moteur électrique asynchrone 18 est remplacé par un moteur électrique synchrone 42 à flux axial.

Dans le présent mode de réalisation, la tenue au vide et à la pression de chaque moteur synchrone 42 est réalisée par les flasques du moteur 42.

La cellule de trempe 40 comprend, en outre, un capteur 43 de la pression dans le volume interne des moteurs synchrones 42. Le capteur de pression 43 peut être disposé sur les conduites 29 d'alimentation des moteurs synchrones 42 en gaz.

Chaque moteur électrique synchrone 42 est un moteur étanche par rapport à l'environnement extérieur à la cellule de trempe 40, au moins lorsque la pression dans chaque moteur 42 est comprise entre 0,1 mbar (10 Pa), ce qui correspond sensiblement à un vide industriel ou vide primaire, et 25 bars (2,5 MPa) .

Lors d'une opération de trempe, la pression dans le volume interne des moteurs synchrones 42 est mesurée par le capteur de pression 43 et la pression dans le volume interne 12 de la cellule de trempe 40 est mesurée par le capteur de pression 36 et les vannes 28 et 30 sont ouvertes et fermées pour ajuster la pression dans le volume interne 12 de la cellule de trempe 40 et la pression dans chaque moteur électrique synchrone 42.

Selon un mode de réalisation, lors d'une opération de trempe, la pression dans le volume interne des moteurs 42 est maintenue strictement supérieure à la pression dans le volume interne 12 de la cellule de trempe 40. L'écart entre la pression dans le volume interne des moteurs synchrones 42 et la pression dans le volume interne 12 de la cellule de trempe 10 est, par exemple, supérieur ou égal à 5 millibars (500 Pa), de préférence 100 millibars (0,01 MPa), plus préférentiellement 500 millibars (0,05 MPa). A titre d'exemple, l'écart entre la pression dans le volume interne des moteurs synchrones 42 et la pression dans le volume interne 12 de la cellule de trempe 40 est sensiblement constant.

Selon un autre mode de réalisation, lors d'une opération de trempe, la pression dans le volume interne des moteurs 42 est maintenue sensiblement égale à la pression dans le volume interne 12 de la cellule de trempe 40.

La pression dans le volume interne des moteurs synchrones 42 peut être asservie par rapport à la pression dans le volume interne 12 de la cellule de trempe 40 de façon que, lors d'une opération de trempe, la pression dans le volume interne des moteurs synchrones 42 soit sensiblement égale à la pression dans le volume interne 12 de la cellule de trempe 40 ou de façon que la pression dans le volume interne des moteurs synchrones 42 soit strictement supérieure à la pression dans le volume interne 12 de la cellule de trempe 40.

Un exemple de cycle de fonctionnement de la cellule de trempe 40 comprend les étapes successives suivantes, un vide primaire étant initialement présent dans le volume interne 12 de la cellule de trempe et dans le volume interne des moteurs synchrones 42 :
injection du gaz de trempe seulement dans les moteurs synchrones 42, par exemple pour atteindre une pression dans les moteurs synchrones de 1 bar, et démarrage des moteurs synchrones 42 ;
ouverture de la porte de l'enceinte 11, introduction d'une charge 14 dans l'enceinte 11 et fermeture de la porte de l'enceinte 11 ;
injection du gaz de trempe dans le volume interne des moteurs synchrones 42 et dans le volume interne 12 de la cellule de trempe 40 jusqu'à la pression souhaitée dans le volume interne des moteurs synchrones 42 et dans le volume interne 12 de la cellule de trempe 40 ;
opération de trempe pendant laquelle les éléments de brassage 17 font circuler le gaz de trempe au niveau de la charge 14 ;
évacuation du gaz de trempe présent dans le volume interne 12 de la cellule de trempe et dans le volume interne des moteurs synchrones 42 jusqu'à l'obtention d'un vide primaire dans le volume interne 12 de la cellule de trempe et dans le volume interne des moteurs synchrones 42 ; et
ouverture de la porte de l'enceinte 11, transfert de la charge 14 hors de l'enceinte et fermeture de la porte de l'enceinte 11.

A titre d'exemple, l'étape d'évacuation du gaz de trempe dans le volume interne 12 de la cellule de trempe et dans le volume interne des moteurs synchrones 42 est obtenue par l'ouverture des vannes 32 et 35, les vannes 28, 30 et 34 étant fermées jusqu'à l'obtention d'une pression d'environ 1 bar (10⁵ Pa) puis par l'ouverture des vannes 34 et 35, les vannes 28, 30 et 32 étant fermées pour obtenir un vide primaire.

A titre d'exemple, l'étape d'injection du gaz de trempe uniquement dans les moteurs synchrones 42 est obtenue par l'ouverture de la vanne 30, les vannes 28, 32, 34 et 35 étant fermées.

A titre de variante, le vide primaire n'est pas réalisé dans les moteurs synchrones 42 à chaque cycle de fonctionnement mais seulement à certains d'entre eux. Dans ce cas, du gaz de trempe peut être présent dans les moteurs synchrones, par exemple à une pression supérieure à 4 bars, alors qu'un vide primaire est présent dans le volume interne 12 de la cellule de trempe.

Le circuit d'alimentation 25 de l'enceinte 11 et des moteurs électriques synchrones 42 peut avoir une structure différente de celle représentée en figure 2. A titre d'exemple, le capteur 43 de la pression dans les moteurs électriques synchrones 42 ou le capteur 36 de la pression dans le volume interne 12 de la cellule de trempe 40 est remplacé par un capteur adapté à mesurer la différence entre la pression dans les moteurs électriques synchrones 42 et la pression dans le volume interne 12 de la cellule de trempe 40. Selon un autre exemple, l'alimentation en gaz de trempe des moteurs électriques synchrones 42 et du volume interne 12 de la cellule de trempe 40 est réalisée par deux circuits d'alimentation en gaz de trempe distincts.

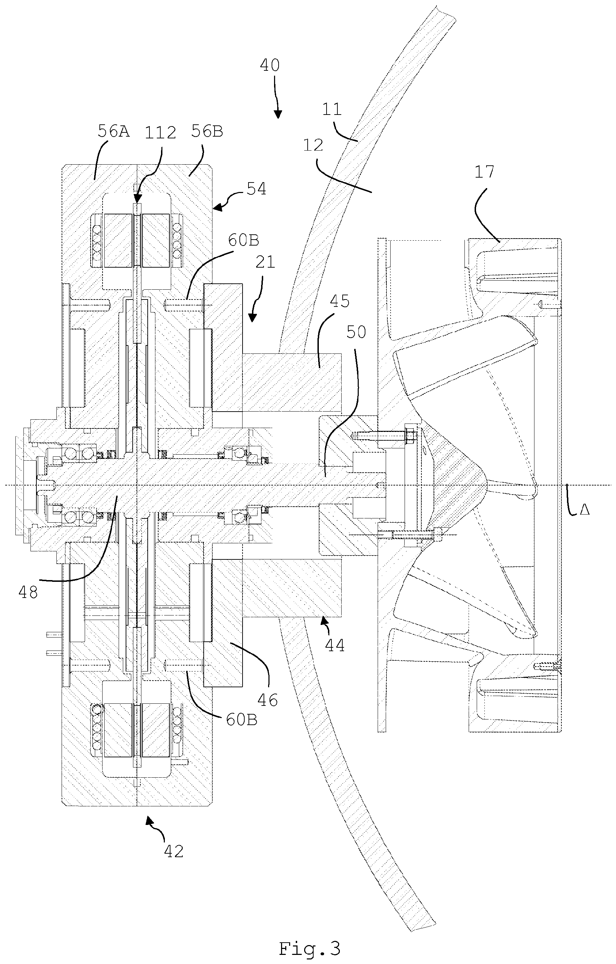

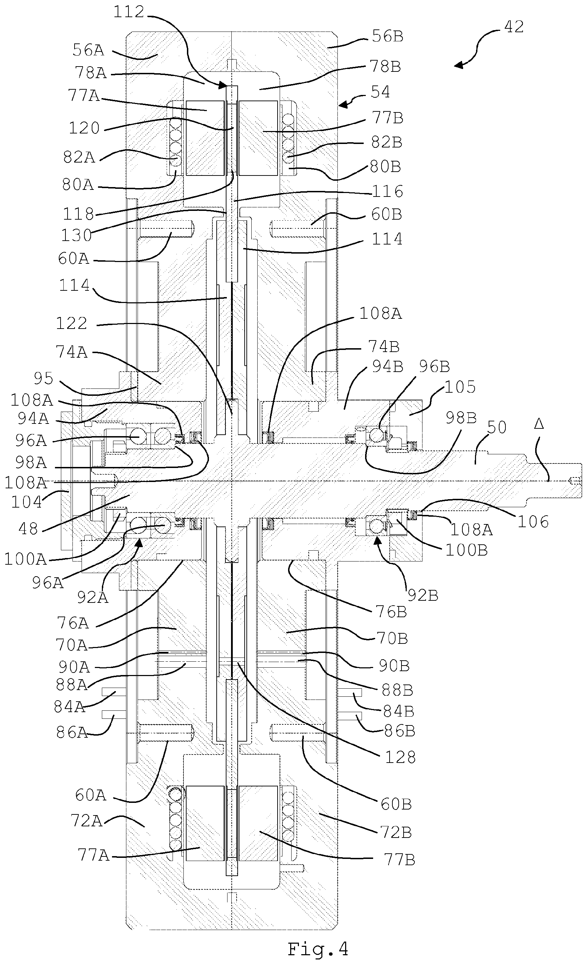

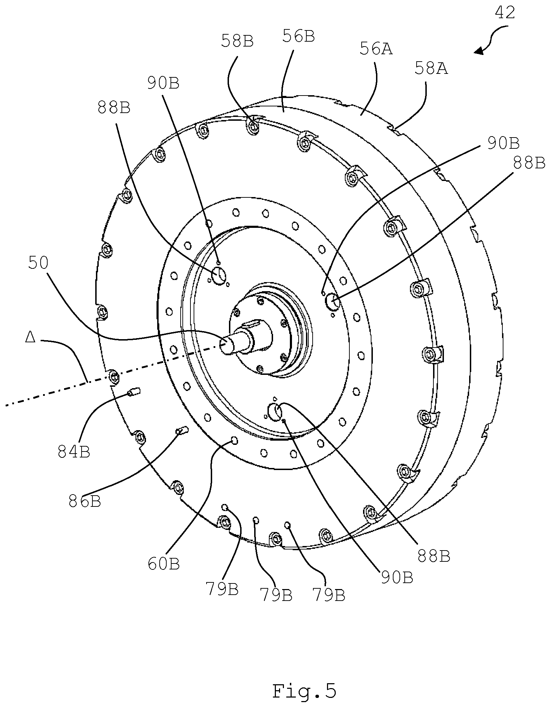

La figure 3 est une coupe partielle plus détaillée d'une partie de la cellule de trempe 40 de la figure 2. En figure 3, on a représenté seulement une partie de l'enceinte 11, l'un des éléments de brassage 17, l'un des dispositifs de couplage 21 et l'un des moteurs électriques synchrones 42. En outre, en figure 3, la conduite 29 d'alimentation du moteur électrique 42 en gaz de trempe n'est pas représentée. Les figures 4 et 5 sont respectivement une coupe et une vue en perspective du moteur électrique synchrone 42 de la figure 3. Le dispositif de couplage 21 comprend un boîtier 44, formé, par exemple, de deux parties 45, 46 soudées l'une à l'autre. Le boîtier 44 est fixé à l'enceinte 11 par soudage ou par des vis. L'élément de brassage 17 est monté à une extrémité 50 de l'arbre d'entraînement 48 du moteur 42.

Les figures 4 et 5 sont respectivement une coupe latérale et une vue en perspective de l'un des moteurs électriques 42.

Le moteur 42 comprend un carter 54 qui se compose principalement de deux flasques 56A et 56B. Chaque flasque 56A, 56B a une structure générale à symétrie de révolution autour de l'axe Δ. De préférence, les flasques 56A et 56B ont une structure identique ou sensiblement identique. Ceci permet avantageusement de réduire les coûts de fabrication des flasques 56A, 56B. Dans la suite de la description, les références désignant des éléments identiques ou analogues relatifs aux flasques 56A, 56B comprennent le même chiffre suivi du suffixe "A" pour un élément relatif au flasque 56A et du suffixe "B" pour un élément relatif au flasque 56B.

Les flasques 56A et 56B sont fixés l'un à l'autre par des vis 58A, 58B, visibles en figure 5, et réparties régulièrement à la périphérie du carter 54. Chaque flasque 56A, 56B comprend des ouvertures filetées 60A, 60B dont les axes s'étendent parallèlement à l'axe Δ et qui sont réparties sur un cylindre d'axe Δ. Le flasque 56B est fixé au dispositif de couplage 21 par l'intermédiaire de vis, non représentées, qui coopèrent avec les ouvertures filetées 60B.

L'arbre d'entraînement 48 est monté à rotation par rapport au carter 54. L'arbre d'entraînement 48 est, par exemple, en acier. De préférence, l'axe de rotation de l'arbre d'entraînement 48 est confondu avec l'axe Δ.

Chaque flasque 56A et 56B comprend une portion cylindrique centrale 70A, 70B d'épaisseur sensiblement constante et se prolongeant par une portion cylindrique périphérique 72A, 72B. La portion cylindrique centrale 70A, 70B et la portion cylindrique périphérique 72A, 72B sont, par exemple, réalisées en acier. La portion cylindrique centrale 70A, 70B comprend un rebord 74A, 74B cylindrique intérieur qui délimite une ouverture cylindrique 76A, 76B d'axe Δ traversant le flasque 56A, 56B. La portion cylindrique périphérique 72A, 72B comprend un logement annulaire 78A, 78B.

Les stators 77A, 77B du moteur électrique 42, représentés de façon schématique aux figures 3 et 4, sont disposés dans les logements 78A, 78B. De préférence, le moteur électrique 42 comprend deux stators distincts 77A, 77B, un premier stator 77A disposé dans le logement 78A et un deuxième stator 77B disposé dans le logement 78B. Des bornes électriques sont prévues sur la portion périphérique 72A, 72B pour l'alimentation des stators, seules les bornes 79B étant visibles en figure 5.

Chaque logement 78A, 78B comprend un enfoncement 80A, 80B dans lequel est disposée une conduite 82A, 82B. A titre d'exemple, la conduite 82A, 82B comprend un tube creux disposé en spirale dans l'enfoncement 80A, 80B. La conduite 82A, 82B comprend, en outre, des portions d'extrémité 84A, 84B, 86A, 86B qui traversent la portion cylindrique périphérique 72A, 72B et qui se projettent hors du carter 54. En fonctionnement, les portions d'extrémité 84A, 84B, 86A, 86B sont reliées à un système d'alimentation en liquide de refroidissement, non représenté, permettant la mise en circulation d'un liquide de refroidissement dans les conduites 82A, 82B.

La portion cylindrique centrale 70A, 70B comprend trois ouvertures 88A, 88B cylindriques dont les axes sont parallèles à l'axe Δ. Seule l'une des ouvertures 88A, 88B est visible aux figures 3 et 4. De préférence, comme cela est représenté en figure 5, les axes des ouvertures 88A, 88B sont répartis sur un cylindre d'axe Δ sensiblement à équidistance les uns des autres. Comme cela sera décrit plus en détail dans la suite, les ouvertures 88A peuvent être reliées en fonctionnement à des conduites d'alimentation en gaz. Les ouvertures 88A et 88B peuvent, en outre, être utilisées lors d'opérations de maintenance. Chaque ouverture 88A, 88B est entourée de plusieurs ouvertures filetées 90A, 90B, par exemple au nombre de trois. Lors du fonctionnement de la cellule de trempe 40, les ouvertures filetées 90A peuvent être utilisées pour le vissage d'une conduite d'alimentation en gaz à l'ouverture 88A et les ouvertures filetées 90B peuvent être utilisées pour le vissage d'un bouchon, non représenté.

L'arbre d'entraînement 48 est relié à chaque flasque 56A, 56B par un palier 92A, 92B, permettant la rotation de l'arbre d'entraînement 48 par rapport au carter 54 autour de l'axe Δ. Le palier 92A comprend un support de palier 94A fixé au rebord 74A, par exemple par vissage, et deux roulements 96A contigus et interposés entre l'arbre 48 et le support de palier 94A. Le palier 92B comprend un support de palier 94B fixé au rebord 74B, par exemple par vissage, et un roulement 96B interposé entre l'arbre 48 et le support de palier 94B. Un anneau 95 est interposé entre le support de palier 94A et le rebord 74A. Le maintien axial des roulements 96A, 96B est assuré d'un côté par une butée 98A, 98B prévue dans l'arbre 48 et de l'autre côté par une bague 100A, 100B vissée sur l'arbre 48.

Du côté du flasque 56A, un couvercle 104 ferme l'ouverture 76A de façon étanche. Du côté du flasque 56B, une pièce 105 ferme l'ouverture 76B et comprend une ouverture 106 pour le passage de la portion 50 de l'arbre d'entraînement 48.

Des joints à lèvre 108A, 108B permettent d'éviter qu'un matériau utilisé pour la lubrification des roulements 96A, 96B ne pénètre dans le reste du moteur 42. Le couvercle 104 peut être fixé au support 94A par des vis, non représentées, et la pièce 105 peut être fixée au rebord 74B par des vis, non représentées.

Le moteur électrique synchrone 42 comprend un rotor 112 relié à l'arbre d'entraînement 48 par deux pièces intermédiaires 114. Le rotor 112 est un rotor à aimants permanents. La structure du rotor 112 et du stator du moteur électrique synchrone 42 peuvent correspondre aux structures décrites dans le document intitulé "Axial Flux Permanent Magnet Disc Machines: A Review" aux noms de M. Aydin, S. Huang et T.A. Lipo (Symposium on Power Electronics, Electrical Drives, Automation, and Motion (SPEEDAM) 2004, Capri, Italy, June 16-18, 2004) .

Le rotor 112 comprend une pièce externe 116 de forme annulaire. La pièce 116 est, par exemple, réalisée en un matériau composite. La pièce annulaire 116 comprend des ouvertures 118 traversantes. Un aimant permanent 120 est disposé dans chaque ouverture 118. Il peut s'agir d'un aimant permanent comprenant un alliage comprenant notamment des terres rares. Les pôles de chaque aimant 120 sont orientés parallèlement à l'axe Δ. L'épaisseur de chaque aimant 120, mesurée selon l'axe Δ, est légèrement inférieure à l'épaisseur de la pièce cylindrique externe 116. Dans un plan perpendiculaire à l'axe Δ, chaque aimant 120 a la forme d'un secteur annulaire.

Chaque pièce intermédiaire 114 a une forme annulaire. La pièce intermédiaire 114 est, par exemple, réalisée en aluminium. L'arbre d'entraînement 48 comprend une collerette 122 entre les butées 98A, 98B. Les pièces intermédiaires 114 prennent en sandwich la collerette 122 et peuvent être fixées à celle-ci, par exemple par vissage. A titre de variante, les pièces intermédiaires 114 peuvent être soudées à la collerette 122. Les pièces intermédiaires 114 prennent en sandwich le bord intérieur de la pièce externe 116 du rotor 112 et peuvent être fixées à celui-ci, par exemple par vissage. A titre de variante, les pièces intermédiaires 114 peuvent être soudées à la pièce externe 116 du rotor 112.

Des ouvertures traversantes 128 peuvent être prévues dans la pièce intermédiaire 114. Le nombre des ouvertures 128 est égal au nombre des ouvertures 88A, 88B. De façon avantageuse, les ouvertures 128 sont réparties pour se trouver chacune simultanément dans le prolongement de l'une des ouvertures 88A, 88B pour certaines positions angulaires de l'arbre 48 par rapport au carter 54.

Pour réduire les risques de pollution des logements 78A, 78B par des polluants provenant du reste du moteur 42, les flasques 56A, 56B délimitent une zone d'étranglement 130 pour le passage de la pièce externe 116 du rotor 112. Le jeu entre les flasques 56A, 56B dans la zone d'étranglement 130 est, de préférence, de quelques dixièmes de millimètres.

En fonctionnement, des conduites d'alimentation en gaz sont reliées aux ouvertures 88A et les ouvertures 88B du moteur 42 sont fermées par des couvercles, non représentés aux figures 3 à 5.

Lorsqu'une opération de maintenance doit être réalisée sur le moteur 42, à titre d'exemple le changement des paliers 92A, 92B, l'entrefer entre les aimants permanents 120 du rotor 112 et chaque stator 77A, 77B doit être maintenu. En effet, si un aimant permanent 120 du rotor 112 vient en contact avec l'un des stators 77A, 77B, ceci rend impossible l'utilisation du moteur électrique.

Dans ce but, lors d'une opération de maintenance, un outil de maintien peut être utilisé pour maintenir constant l'entrefer entre le rotor 112 et les stators 77A, 77B. Cet outil de maintien peut être fixé à chaque flasque 56A, 56B et comprendre des doigts qui sont introduits dans les ouvertures 88A et 88B pour venir en appui contre la pièce intermédiaire 114. Les ouvertures 128 peuvent faciliter le centrage des doigts. Dans ce cas, chaque ouverture 88A peut être disposée sensiblement dans le prolongement de l'une des ouvertures 88B comme cela est représenté en figure 4. De façon avantageuse, chaque flasque 56A, 56B comprend trois ouvertures 88A, 88B. Ceci permet de mettre, pour chaque flasque 56A, 56B, trois doigts en appui contre une face des pièces intermédiaires 114 du rotor 112 et d'assurer un appui stable du rotor contre les doigts.

Lorsque les pièces intermédiaires 114 sont prises en sandwich entre les doigts, les doigts sont bloqués en position. Ainsi, une opération de maintenance sur le moteur 42 peut être réalisée, par exemple le démontage des paliers 92A, 92B, sans risque de modification de l'entrefer entre les aimants permanents 120 du rotor 112 et les stators 77A, 77B.

La cellule de trempe 40 présente plusieurs avantages.

Un avantage est que l'encombrement latéral global, mesuré selon l'axe Δ, de la cellule de trempe 40 est réduit par rapport à la cellule de trempe 10 représentée en figure 1. En effet, l'encombrement axial du moteur synchrone 42 qui est, par exemple, d'environ 200 mm, est inférieur à l'encombrement axial du moteur asynchrone 18 qui peut être d'environ 1 m.

Un autre avantage est que les moteurs synchrones 42 peuvent fournir un couple moteur sensiblement constant, par exemple à une valeur comprise entre 500 Nm et 800 Nm, par exemple d'environ 600 Nm, dans une plage importante de vitesses de rotation de l'arbre moteur, par exemple comprise entre quelques tours par minute et 5000 tours/min, ce qui est adapté pour l'entraînement en rotation d'une turbine hélicocentrifuge de brassage dans une cellule de trempe.

En conséquence, le rendement du moteur synchrone 42 reste constant dans une plage de vitesses très étendue alors que les moteurs asynchrones 18 ont un rendement optimum seulement à leur point de fonctionnement nominal, par exemple vers 3000-3600 tours/min. Il en résulte que l'économie de puissance électrique consommée lors d'un cycle de fonctionnement de la cellule de trempe 40 est comprise entre 20 % et 50 % par rapport à la cellule de trempe 10.

Pour déterminer avec précision les conditions réelles de réalisation de la trempe des pièces traitées, la vitesse réelle de rotation variable des éléments de brassage 17 au cours de l'opération de trempe doit être déterminée. Un autre avantage de la cellule de trempe 40 est que la vitesse de rotation de l'élément de brassage 17 entraîné par le moteur synchrone 42 peut être déterminée directement à partir d'un paramètre d'alimentation du moteur synchrone, par exemple le courant et/ou la tension d'alimentation du moteur. Ceci n'est pas le cas pour la cellule de trempe 10 en raison du glissement du moteur électrique asynchrone 19. Pour la cellule 10, des moyens supplémentaires doivent être prévus pour mesurer avec précision la vitesse de rotation réelle de l'élément de brassage 17 au cours d'une opération de trempe.

Un autre avantage est que le volume interne de chaque moteur synchrone 42 est inférieur à 15 litres, de préférence inférieur à 10 litres. Ceci permet avantageusement de simplifier la fabrication du moteur synchrone 42 du point de vue des réglementations des appareils à pression.

Un autre avantage du mode de réalisation dans lequel une surpression est maintenue dans le volume interne du moteur synchrone 42 par rapport au volume interne 12 de l'enceinte 11 est que le risque de passage de poussières du volume interne 12 de la cellule de trempe 40 vers le volume interne des moteurs synchrones 42 est réduit, voire annulé.

Un autre avantage est que l'utilisation de flasques 56A, 56B en acier à parois épaisses pour le moteur 42 permet l'utilisation du moteur malgré les pressions élevées présentes dans celui-ci.

Des modes de réalisation particuliers de la présente invention ont été décrits. Diverses variantes et modifications apparaîtront à l'homme de l'art. En particulier, bien que la cellule de trempe 40 représentée en figure 2 comprenne deux moteurs synchrones 42, il est clair que la cellule de trempe peut ne comprendre qu'un seul moteur électrique synchrone ou plus de deux moteurs électriques synchrones.

## Revendications

1. Cellule de trempe (40) comprenant une enceinte (11) contenant au moins un élément de brassage (17) d'un gaz de trempe à une pression supérieure à 0,4 MPa et un moteur électrique synchrone (42), à flux axial et à aimants permanents, adapté à entraîner en rotation l'élément de brassage.

2. Cellule de trempe selon la revendication 1, dans laquelle le moteur électrique synchrone (42) est étanche par rapport à l'extérieur de la cellule de trempe (40), pour une pression dans le moteur électrique synchrone comprise entre 10 Pa et 2500000 Pa.

3. Cellule de trempe selon la revendication 1 ou 2, dans laquelle le moteur électrique synchrone (42) comprend au moins deux flasques (56A, 56B) en acier délimitant un volume contenant au moins un stator (77A, 77B), lesdits flasques (56A, 56B) résistant à la pression dans le moteur électrique synchrone.

4. Cellule de trempe selon l'une quelconque des revendications 1 à 3, comprenant un circuit d'alimentation (25) en gaz de trempe de l'enceinte (11) et du moteur électrique synchrone (42).

5. Cellule de trempe selon la revendication 4, dans laquelle le circuit d'alimentation (25) est adapté à maintenir, lors d'une opération de trempe, la pression dans le moteur électrique synchrone (42) strictement supérieure à la pression dans l'enceinte (11).

6. Cellule de trempe selon la revendication 4, dans laquelle la pression dans le moteur électrique synchrone (42) est supérieure d'au moins 500 Pa à la pression dans l'enceinte (11) .

7. Cellule de trempe selon la revendication 4, dans laquelle le circuit d'alimentation (25) est adapté à maintenir, lors d'une opération de trempe, la pression dans le moteur électrique synchrone (42) égale à la pression dans l'enceinte (11) .

8. Cellule de trempe selon l'une quelconque des revendications 1 à 7, comprenant un capteur (43) de la pression dans le moteur électrique synchrone (42) et/ou un capteur de la différence entre la pression dans le moteur électrique synchrone (42) et la pression dans l'enceinte (11).

9. Cellule de trempe selon la revendication 4, dans laquelle le circuit d'alimentation (25) est adapté à asservir la pression dans le moteur électrique synchrone (42) par rapport à la pression dans l'enceinte (11).

10. Cellule de trempe selon l'une quelconque des revendications 1 à 9, dans laquelle le moteur électrique synchrone (42) est situé en dehors de l'enceinte (11) et comprend un arbre d'entraînement (48) relié à l'élément de brassage (17) au travers de l'enceinte.

11. Cellule de trempe selon l'une quelconque des revendications 1 à 10, dans laquelle le moteur électrique synchrone (42) comprend un rotor (112) et deux stators (77A, 77B) situés de part et d'autre du rotor.

12. Cellule de trempe selon les revendications 3 et 10, dans laquelle le moteur électrique synchrone (42) comprend un rotor (112) situé entre les deux flasques et relié à l'arbre d'entraînement (48), chaque flasque comprenant une première ouverture traversante pour le passage de l'arbre d'entraînement et des deuxièmes ouvertures traversantes (88A, 88B) autour de la première ouverture.

13. Cellule de trempe selon la revendication 12, dans laquelle au moins l'une des deuxièmes ouvertures (88A, 88B) est reliée à une conduite d'alimentation du moteur en gaz lorsque la cellule de trempe (40) est en fonctionnement.

## Patentansprüche

1. Abkühl- bzw. Abschreckzelle (40), die eine Umhüllung (11) aufweist, welche wenigstens ein Element (17) zum Rühren eines Kühlgases mit einem Druck von mehr als 0,4 MPa enthält, und einen Radialströmungs-Dauermagneten-Synchronelektromotor (42), der zum Rotieren des Rührelements geeignet ist.

2. Abkühlzelle nach Anspruch 1, wobei der Synchronelektromotor (42) bezüglich der Außenseite der Abkühlzelle (40) für einen Druck in dem Synchronelektromotor in dem Bereich von 10 Pa bis 2500000 Pa dicht ist.

3. Abkühlzelle nach Anspruch 1 oder 2, wobei der Synchronelektromotor (42) wenigstens zwei Stahlflansche (56A, 56B) aufweist, die ein Volumen begrenzen, das wenigstens einen Stator (77A, 77B) enthält, wobei die Flansche (56A, 56B) dem Druck in dem Synchronelektromotor widerstehen.

4. Abkühlzelle nach einem der Ansprüche 1 bis 3, die eine Schaltung (25) zum Liefern von Kühlgas an das Gehäuse (11) und den Synchronelektromotor (42) aufweist.

5. Abkühlzelle nach Anspruch 4, wobei die Lieferschaltung (25) geeignet ist, um während eines Kühlvorgangs den Druck in dem Synchronelektromotor (42) höher als den Druck in dem Gehäuse (11) zu halten.

6. Abkühlzelle nach Anspruch 4, wobei der Druck in dem Synchronelektromotor (42) um wenigstens 500 Pa höher ist als der Druck in dem Gehäuse (11).

7. Abkühlzelle nach Anspruch 4, wobei die Lieferschaltung (25) geeignet ist, während eines Kühlvorgangs den Druck in dem Synchronelektromotor (42) gleich dem Druck in dem Gehäuse (11) zu halten.

8. Abkühlzelle nach einem der Ansprüche 1 bis 7, die einen Sensor (43) des Drucks in dem Synchronelektromotor (42) und/oder einen Sensor der Differenz zwischen dem Druck in dem Synchronelektromotor (42) und dem Druck in dem Gehäuse (11) aufweist.

9. Abkühlzelle nach Anspruch 4, wobei die Lieferschaltung (25) geeignet ist, den Druck in dem Synchronelektromotor (42) mit dem Druck in dem Gehäuse (11) zu steuern.

10. Abkühlzelle nach einem der Ansprüche 1 bis 9, wobei sich der Synchronelektromotor (42) außerhalb des Gehäuses (11) befindet und eine mit dem Rührelement (17) durch das Gehäuse verbundene Antriebswelle (48) aufweist.

11. Abkühlzelle nach einem der Ansprüche 1 bis 10, wobei der Synchronelektromotor (42) einen Rotor (112) und zwei Statoren (77A, 77B) aufweist, die auf beiden Seiten des Rotors angeordnet sind.

12. Abkühlzelle nach den Ansprüchen 3 und 10, wobei der Synchronelektromotor (42) einen Rotor (112) aufweist, der zwischen den beiden Flanschen angeordnet und mit der Antriebswelle (48) verbunden ist, wobei jeder Flansch eine erste Durchgangsöffnung zum Durchlassen der Antriebswelle und zweite Durchgangsöffnungen (88A, 88B) um die erste Öffnung herum aufweist.

13. Abkühlzelle nach Anspruch 12, wobei wenigstens eine der zweiten Öffnungen (88A, 88B) mit einer Leitung zum Liefern von Gas an den Motor verbunden ist, wenn die Abkühlzelle (40) in Betrieb ist.

## Claims

1. A quenching cell (40) comprising an enclosure (11) containing at least one element (17) for stirring a quenching gas at a pressure greater than 0.4 MPa and a radial flow permanent magnet synchronous electric motor (42) capable of rotating the stirring element.

2. The quenching cell of claim 1, wherein the synchronous electric motor (42) is tight with respect to the outside of the quenching cell (40), for a pressure in the synchronous electric motor in the range from 10 Pa to 2,500,000 Pa.

3. The quenching cell of claim 1 or 2, wherein the synchronous electric motor (42) comprises at least two steel flanges (56A, 56B) delimiting a volume containing at least one stator (77A, 77B), said flanges (56A, 56B) resisting the pressure in the synchronous electric motor.

4. The quenching cell of any of claims 1 to 3, comprising a circuit (25) for supplying quenching gas to the enclosure (11) and the synchronous electric motor (42).

5. The quenching cell of claim 4, wherein the supply circuit (25) is capable of maintaining, during a quenching operation, the pressure in the synchronous electric motor (42) higher than the pressure in the enclosure (11).

6. The quenching cell of claim 4, wherein the pressure in the synchronous electric motor (42) is greater by at least 500 Pa than the pressure in the enclosure (11).

7. The quenching cell of claim 4, wherein the supply circuit (25) is capable of maintaining, during a quenching operation, the pressure in the synchronous electric motor (42) equal to the pressure in the enclosure (11).

8. The quenching cell of any of claims 1 to 7, comprising a sensor (43) of the pressure in the synchronous electric motor (42) and/or a sensor of the difference between the pressure in the synchronous electric motor (42) and the pressure in the enclosure (11).

9. The quenching cell of claim 4, wherein the supply circuit (25) is capable of controlling the pressure in the synchronous electric motor (42) with the pressure in the enclosure (11) .

10. The quenching cell of any of claims 1 to 9, wherein the synchronous electric motor (42) is located outside of the enclosure (11) and comprises a drive shaft (48) connected to the stirring element (17) through the enclosure.

11. The quenching cell of any of claims 1 to 10, wherein the synchronous electric motor (42) comprises a rotor (112) and two stators (77A, 77B) located on either side of the rotor.

12. The quenching cell of claims 3 and 10, wherein the synchronous electric motor (42) comprises a rotor (112) located between the two flanges and connected to the drive shaft (48), each flange comprising a first through opening for the passage of the drive shaft and second through openings (88A, 88B) around the first opening.

13. The quenching cell of claim 12, wherein at least one of the second openings (88A, 88B) is connected to a pipe for supplying gas to the motor when the quenching cell (40) is in operation.
